# EUROPÄISCHE PATENTANMELDUNG

(11) **EP 2 248 873 A2**
(43) Veröffentlichungstag der Anmeldung: **10.11.2010**
(21) Anmeldenummer: 10450064.0
(22) Anmeldetag: 22.04.2010
(51) Int. Cl.: C10G 50/00, B01J 8/04

(54) **Verfahren und Vorrichtung zum katalytischen Herstellen von Bio-Rohöl**

(30) Priorität: 30.04.2009 AT 6662009
(71) Anmelder: Joas, Elisabeth, 4840 Vöcklabruck (AT); Muhr-Kröpfel, Elisabeth, 4800 Attnang-Puchheim (AT); Pickhardt-Kröpfel, Sonja, 4800 Attnang-Puchheim (AT); Schwarzlmüller-Kröpfel, Martina, 4800 Attnang-Puchheim (AT)
(72) Erfinder: Joas, Emil, 4840 Vöcklabruck (AT)
(74) Vertreter: Hübscher, Helmut

(57) **Zusammenfassung**

Es wird ein Verfahren zum katalytischen Herstellen von Bio-Rohöl beschrieben, wobei ein aus Biomasse gewonnenes, Wasserstoff enthaltendes Synthesegas in einem Katalysator unter Wärmezufuhr zu einem Produktgas aus höheren Kohlenwasserstoffen umgesetzt und dann zum Abscheiden des Rohöls kondensiert wird. Um vorteilhafte Herstellungsbedingungen zu schaffen, wird vorgeschlagen, dass durch Methanogenese aus einer durch Hydrolyse und Versäuerung aufgeschlossenen Biomasse gewonnenes Methan mit während der Versäuerung der Biomasse anfallendem Wasserstoff gemischt und als Synthesegas dem Katalysator zugeführt wird.

## Beschreibung

Die Erfindung bezieht sich auf ein Verfahren zum katalytischen Herstellen von Bio-Rohöl, wobei ein aus Biomasse gewonnenes, Wasserstoff enthaltendes Synthesegas in einem Katalysator unter Wärmezufuhr zu einem Produktgas aus höheren Kohlenwasserstoffen umgesetzt und dann zum Abscheiden des Rohöls kondensiert wird, sowie auf eine Vorrichtung zum katalytischen Herstellen von Bio-Rohöl.

Zum Herstellen von Bio-Rohöl aus Biomasse ist es in Anlehnung an das Fischer-Tropsch-Verfahren bekannt, aus der Biomasse durch Pyrolyse ein im Wesentlichen Wasserstoff und Kohlenmonoxid enthaltendes Synthesegas zu gewinnen, das in einem Festbettkatalysator unter Druck und Wärme zu einem Produktgas aus gesättigten und ungesättigten Kohlenwasserstoffen unterschiedlicher Kettenlängen umgesetzt wird, das zu Bio-Rohöl kondensiert wird. Nachteilig bei diesem bekannten Verfahren zum katalytischen Herstellen von Rohöl aus Biomasse ist vor allem, dass eine wirtschaftliche Umsetzung des Verfahrens großtechnische Anlagen erfordert. Außerdem reicht der im Synthesegas enthaltene Wasserstoff nicht für eine weitgehende katalytische Umsetzung des Synthesegases in entsprechende Kohlenwasserstoffe aus, sodass zusätzlich Wasserstoff zugeführt werden muss.

Der Erfindung liegt somit die Aufgabe zugrunde, ein Verfahren anzugeben, mit dessen Hilfe Biomasse auch in kleineren Anlagen wirtschaftlich in Rohöl umgesetzt werden kann, und zwar ohne zusätzliche Wasserstoffquellen zur Verfügung stellen zu müssen.

Ausgehend von einem Verfahren zum katalytischen Herstellen von Bio-Rohöl der eingangs geschilderten Art löst die Erfindung die gestellte Aufgabe dadurch, dass durch Methanogenese aus einer durch Hydrolyse und Versäuerung aufgeschlossenen Biomasse gewonnenes Methan mit während der Versäuerung der Biomasse anfallendem Wasserstoff gemischt und als Synthesegas dem Katalysator zugeführt wird.

Die Erfindung nützt den Umstand aus, dass sich ein Gemisch aus Methan und Wasserstoff vorteilhaft katalytisch zu einem Produktgas aus höheren Kohlenwasserstoffen umsetzen lässt, sodass von einer Biogaserzeugung ausgegangen werden kann, die in herkömmlicher Art einen anaeroben Aufschluss einer beispielsweise im landwirtschaftlichen Bereich anfallenden Biomasse durch eine Hydrolyse und eine Versäuerung mit nachfolgender Methanogenese umfasst. Aus dem gewonnenen Biogas, das vor allem Methan und Kohlendioxid enthält, braucht lediglich das Kohlendioxid abgetrennt zu werden, um das verbleibende Methan mit Wasserstoff zu mischen, der bei der Versäuerung der Biomasse anfällt und die nachfolgende Methanogenese behindert. In diesem Zusammenhang ist zu bedenken, dass einerseits die Versäuerung rascher als die Methanogenese abläuft und anderseits die methanogenen Bakterien empfindlich auf eine Übersäuerung reagieren, sodass es vorteilhaft ist, den bei der Versäuerung anfallenden Wasserstoff beispielsweise durch das Anlegen eines elektrischen Feldes abzuziehen, wodurch nicht nur günstigere Verhältnisse für die Methanogenese geschaffen, sondern auch die Versäuerung mit dem Vorteil beschleunigt werden kann, dass für das Mischen des Synthesegases ausreichend Wasserstoff zur Verfügung gestellt werden kann.

Ist ein Methanüberschuss vorhanden, so spielt dies hinsichtlich der Verfahrensführung keine Rolle, weil das dann im Produktgas enthaltene Methan während der Kondensierung des Produktgases abgetrennt und wieder zur Bildung des Synthesegases rückgeführt werden kann.

Zur Durchführung eines solchen Verfahrens zum katalytischen Herstellen von Bio-Rohöl kann von einem beheizbaren, über eine Druckleitung mit Synthesegas beaufschlagbaren Katalysator zum Umsetzen des Synthesegases in ein Produktgas aus höheren Kohlenwasserstoffen und mit einem an den Katalysator angeschlossenen Kondensator für das Produktgas ausgegangen werden. Um ein entsprechendes Synthesegas aus einer Mischung von aus einer Biogasanlage gewonnenem Methan und Wasserstoff zu erhalten, kann die Druckleitung für das Synthesegas über eine Strahlpumpe einerseits an eine Druckleitung eines mit Methangas beaufschlagbaren Verdichters und anderseits an eine Wasserstoffleitung angeschlossen werden. Das mittels des Verdichters hochgespannte Methangas dient als Treibgas für die Strahlpumpe, sodass über die Strahlpumpe dem Methangas das Wasserstoffgas in einem vorgegebenen Verhältnis zugemischt wird und mit dieser Mischung der Katalysator unter einem entsprechenden Druck beaufschlagt werden kann.

Damit für den Antrieb des Verdichters keine Fremdenergie eingesetzt zu werden braucht, kann der Verdichter durch eine mit einem Teilstrom des Methans als Brenngas betreibbare Gasturbine angetrieben werden. Die Verwendung einer mit einem Teil des aus einer Biogasanlage gewonnenen Methans als Brenngas befeuerbaren Gasturbine bringt außerdem den Vorteil mit sich, dass der Katalysator mit Hilfe der Abgase dieser Gasturbine beheizt werden kann, womit eine vorteilhafte Energieausnützung sichergestellt wird, zumal gegebenenfalls anfallende Überschussenergie in der Gasturbine zur Stromerzeugung abgearbeitet werden kann. In diesem Zusammenhang stellt auch die Rückleitung eines aus dem Produktgas abgeschiedenen Methanüberschusses eine vorteilhafte Möglichkeit dar, den Gesamtwirkungsgrad einer solchen Anlage hoch zu halten.

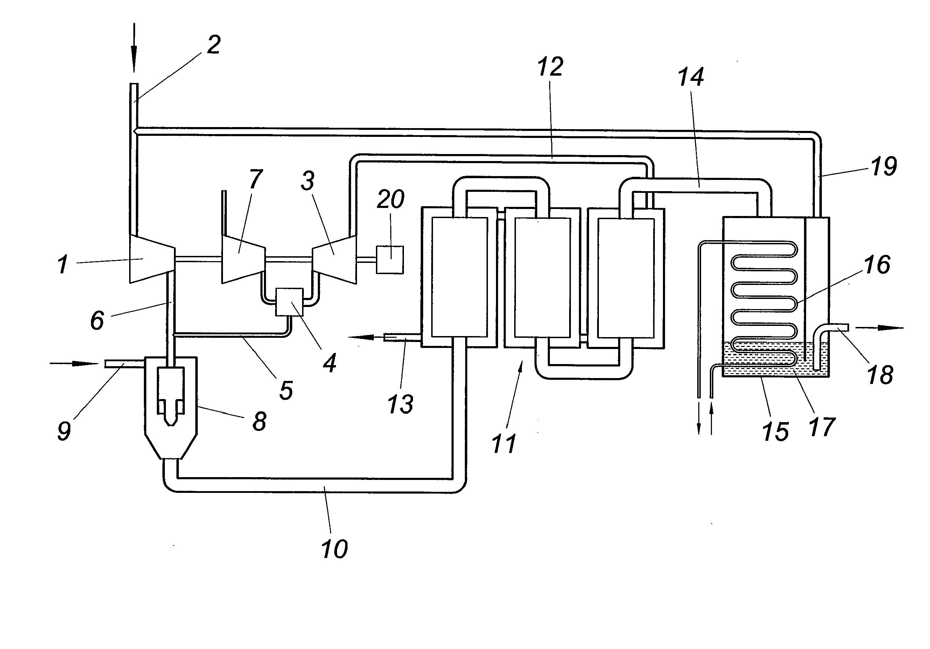

Anhand der Zeichnung wird das erfindungsgemäße Verfahren zum katalytischen Herstellen von Bio-Rohöl näher beschrieben, und zwar wird eine erfindungsgemäße Vorrichtung zum katalytischen Herstellen von Rohöl in einem schematischen Blockschaltbild gezeigt.

Die dargestellte Vorrichtung zum katalytischen Herstellen von Bio-Rohöl weist einen Verdichter 1 für Methangas auf, das aus einer Biogasanlage gewonnen und über eine Speiseleitung 2 dem Verdichter 1 zugeführt wird. Dieser Verdichter wird von einer Gasturbine 3 angetrieben, und zwar mit Hilfe eines Teilstroms des verdichteten Methangases. Zu diesem Zweck ist ein Brenner 4 über eine Zweigleitung 5 an die Druckleitung 6 des Verdichters 1 angeschlossen. Die Verbrennungsluft für den Brenner 4 wird über einen Verdichter 7 zur Verfügung gestellt, der ebenfalls von der Gasturbine 3 angetrieben wird. Mit Hilfe des im Verdichter 1 hochgespannten Methangases wird eine Strahlpumpe 8 beaufschlagt, die saugseitig mit einer Wasserstoffleitung 9 verbunden ist, sodass das Methangas als Treibgas für die Strahlpumpe 8 dient und Wasserstoff über die Wasserstoffleitung 9 ansaugt. Der aus der vorgeschalteten Biogasanlage erhaltene Wasserstoff wird somit mittels der Strahlpumpe 8 mit dem Methangas vermischt und die Mischung als Synthesegas über eine Druckleitung 10 einem Katalysator 11 zugeführt, der als mehrstufiger Festbettkatalysator in an sich bekannter Weise ausgeführt ist. Zur Beheizung des Katalysators 11 dienen die Abgase der Gasturbine 3, die dem Katalysator 11 über eine Abgasleitung 12 zugeführt werden. Das abgekühlte Abgas wird über eine Leitung 13 abgezogen und kann an die Biogasanlage abgegeben werden.

Das Gemisch aus Wasserstoff und Methan wird im Katalysator 11 in ein Produktgas aus höheren Kohlenwasserstoffen umgesetzt, das über eine Produktgasleitung 14 in einen Kondensator 15 strömt, dessen Kühlkreis mit 16 bezeichnet ist. Die kondensierten Kohlenwasserstoffe bilden ja einen Sumpf 17, aus dem das Bio-Rohöl über eine Austragsleitung 18 abgezogen werden kann. Enthält das Produktgas überschüssiges Methan, so kann dieses Methan aus dem Kondensator 15 über eine Rückleitung 19 ausgeschieden und der Speiseleitung 2 für das Methangas aus der Biogasanlage im Kreislauf zugefördert werden. Bei einem im Vergleich zum Wasserstoffangebot bestehenden Überschuss an Methan kann das überschüssige Methan in der Gasturbine 3 abgearbeitet und beispielsweise für eine Stromerzeugung eingesetzt werden. Die Gasturbine 3 treibt zu diesem Zweck einen Generator 20 an.

Die Druckbeaufschlagung des Synthesegases in der Druckleitung 10 braucht lediglich die Gasförderung durch den Katalysator 11 sicherzustellen, sodass im Bereich des Kondensators 15 der Gasdruck weitgehend abgebaut ist. Dies bedeutet, dass die Druckbelastung der druckführenden Teile beschränkt bleiben kann, was vorteilhafte Konstruktionsvoraussetzungen für die Vorrichtung darstellt.

## Patentansprüche

1. Verfahren zum katalytischen Herstellen von Bio-Rohöl, wobei ein aus Biomasse gewonnenes, Wasserstoff enthaltendes Synthesegas in einem Katalysator unter Wärmezufuhr zu einem Produktgas aus höheren Kohlenwasserstoffen umgesetzt und dann zum Abscheiden des Rohöls kondensiert wird, **dadurch gekennzeichnet, dass** durch Methanogenese aus einer durch Hydrolyse und Versäuerung aufgeschlossenen Biomasse gewonnenes Methan mit während der Versäuerung der Biomasse anfallendem Wasserstoff gemischt und als Synthesegas dem Katalysator zugeführt wird.

2. Verfahren nach Anspruch 1, **dadurch gekennzeichnet, dass** das im Produktgas enthaltene Methan während der Kondensierung des Produktgases von diesem abgetrennt und zur Bildung des Synthesegases eingesetzt wird.

3. Vorrichtung zum katalytischen Herstellen von Bio-Rohöl mit einem beheizbaren, über eine Druckleitung mit Synthesegas beaufschlagbaren Katalysator zum Umsetzen des Synthesegases in ein Produktgas aus höheren Kohlenwasserstoffen und mit einem an den Katalysator angeschlossenen Kondensator für das Produktgas, **dadurch gekennzeichnet, dass** die Druckleitung (10) für das Synthesegas über eine Strahlpumpe (8) einerseits an eine Druckleitung (6) eines mit Methangas beaufschlagbaren Verdichters (1) und anderseits an eine Wasserstoffleitung (9) angeschlossen ist.

4. Vorrichtung nach Anspruch 3, **dadurch gekennzeichnet, dass** der Verdichter (1) durch eine mit einem Teilstrom des Methans als Brenngas betreibbare Gasturbine (3) antreibbar ist.

5. Vorrichtung nach Anspruch 4, **dadurch gekennzeichnet, dass** der Katalysator (11) mit Hilfe der Abgase der Gasturbine (3) für den Antrieb des Verdichters (1) beheizbar ist.

6. Vorrichtung nach einem der Ansprüche 3 bis 5, **dadurch gekennzeichnet, dass** der Verdichter (1) saugseitig an eine mit dem Kondensator (15) verbundene Rückleitung (19) für aus dem Produktgas abgeschiedenes Methan angeschlossen ist.
